# EUROPÄISCHE PATENTSCHRIFT

(11) **EP 2 501 650 B1**
(45) Veröffentlichungstag und Bekanntmachung des Hinweises auf die Patenterteilung: **07.09.2016**
(21) Anmeldenummer: 10788261.5
(22) Anmeldetag: 08.11.2010
(51) Int. Cl.: C01B 33/04, C01B 33/107

(54) **VERFAHREN ZUR HERSTELLUNG VON HYDRIDOSILANEN**
METHOD FOR PRODUCING HYDRIDOSILANES
PROCÉDÉ DE PRODUCTION D'HYDRUROSILANES

(30) Priorität: 18.11.2009 DE 102009053804
(43) Veröffentlichungstag der Anmeldung: 26.09.2012
(73) Patentinhaber: Evonik Degussa GmbH, 45128 Essen (DE)
(72) Erfinder: WIEBER, Stephan, 76137 Karlsruhe (DE); PATZ, Matthias, 46240 Bottrop (DE); TROCHA, Martin, 45136 Essen (DE); RAULEDER, Hartwig, 79618 Rheinfelden (DE); MÜH, Ekkehard, 79618 Rheinfelden (DE); STÜGER, Harald, A-8042 Graz (AT); WALKNER, Christoph, A-8010 Graz (AT)
(74) Vertreter: Olbricht, Gerhard
(86) Internationale Anmeldenummer: PCT/EP2010/067016
(87) Internationale Veröffentlichungsnummer: WO 2011/061088

(56) Entgegenhaltungen:
- EP-A1- 0 673 960
- WO-A1-2008/051328
- US-A- 4 395 389
- A. KACZMARCZYC, M. MILLARD, J. W. NUSS, G. URRY: "The preparation and some properties of a new pentasilicon dodecachloride, Si5Cl12", JOURNAL OF INORGANIC AND NUCLEAR CHEMISTRY, Bd. 26, 1964, Seiten 421-425, XP002628233, in der Anmeldung erwähnt
- K. H. CHUNG, A, N. YAO, J. BENZIGER, J. C. STURM, K. K. SINGH, D. CARLSON, S. KUPPURAO4: "Ultrahigh growth rate of epitaxial silicon by chemical vapor deposition at low temperature with neopentasilane", APPLIED PHYSICS LETTERS, Bd. 92, 18. März 2008 (2008-03-18), Seiten 113506-1-113506-3, XP002628234,

## Beschreibung

Die Erfindung betrifft ein Verfahren zur Herstellung von Hydridosilanen aus Halogensilanen.

Hydridosilane bzw. ihre Gemische sind in der Literatur als mögliche Edukte für die Erzeugung von Siliciumschichten beschrieben. Dabei sind unter Hydridosilanen Verbindungen zu verstehen, die im Wesentlichen lediglich Silicium- und Wasserstoffatome enthalten., Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Monosilan, Disilan, Trisilan, Cyclopentasilan und Neopentasilan genannt. Hydridosilane mit mindestens drei bzw. vier Siliciumatomen können eine lineare, verzweigte oder (ggf. bi-/poly-)cyclische Struktur mit Si-H-Bindungen aufweisen und lassen sich durch die jeweiligen generischen Formeln SiₙH₂ₙ₊₂ (linear bzw. verzweigt; mit n ≥ 2), SiₙH₂ₙ (cyclisch; mit n ≥ 3) oder SiₙH₂(ₙ₋ᵢ) (bi- bzw. polycyclisch; n ≥ 4; i = {Zahl der Cyclen} - 1) beschreiben.

Viele Verfahren zur Herstellung von Hydridosilanen beruhen auf einer Dehydropolymerisationsreaktion von niederen Hydridosilanen, insbesondere SiH₄, zu höheren Silanen unter formaler H₂-Abspaltung. Die Dehydropolymerisationsreaktion kann dabei 1) thermisch (US 6,027,705 A für den Fall, dass kein Katalysator eingesetzt wird) und/oder 2) durch Einsatz von Katalysatoren wie a) elementaren Übergangsmetallen (heterogene Katalyse; US 6,027,705 A für den Fall, dass Platingruppen-Metalle, d.h. Ru, Rh, Pd, Os, Ir, Pt, eingesetzt werden; US 5,700,400 A für Metalle der Gruppe 3B-7B und 8 - d.h. die Übergangsmetalle/Lanthanide ohne Cu- und Zn-Gruppe), b) Nichtmetalloxiden (heterogene Katalyse; US 6,027,705 A für den Fall, dass Al₂O3 oder SiO₂ eingesetzt werden), c) hydridischen Cyclopentadienyl-Komplexen von Scandium, Yttrium oder seltenen Erden (homogene Katalyse; US 4,965,386 A, US 5,252,766 A), d) Übergangsmetall-Komplexen (homogene Katalyse; US 5,700,400 A für Komplexe der Metalle der Gruppe 3B - 7B und 8 - d.h. die Übergangsmetalle/Lanthanide ohne Cu-und Zn-Gruppe; JP 02-184513 A) oder e) bestimmten auf einem Träger immobilisierten Übergangsmetallen (heterogene Katalyse; US 6,027,705 A für den Fall, dass Platingruppen-Metalle auf einem Träger wie z.B. SiO₂ eingesetzt werden, US 5,700,400 A für auf Kohlenstoff, SiO₂ oder Al₂O₃ immobilisiertes Ruthenium, Rhodium, Palladium oder Platin) oder Übergangsmetallkomplexen (heterogene katalyse, US 6,027,705 A für den Fall, dass Platingruppen-Metallkomplexe auf einem Träger wie z.B. SiO₂ eingesetzt werden) durchgeführt werden. All diese Verfahren weisen jedoch den Nachteil auf, dass die eingesetzten niederen Hydridosilane selbst erst aufwändig hergestellt werden müssen. Weiterhin ist an diesen Verfahren nachteilig, dass sie aufgrund der Selbstentzündlichkeit der Edukte einen hohen apparativen Aufwand erfordern. Schließlich konnten mit diesen Verfahren bislang keine ausreichend hohen Ausbeuten realisiert werden. Weiterhin ist eine aufwändige Reinigung erforderlich.

Ein anderes Verfahren zur Herstellung von Hydridosilanen, bei dem Dihalosilane, ggf. zusammen mit Trihalosilanen und/oder Tetrahalosilanen, auf elektrochemischem Wege umgesetzt werden, beschreibt z.B. EP 0 673 960 A1. Auch dieses Verfahren hat jedoch den Nachteil, dass es aufgrund der elektrochemischen Reaktionsführung einen hohen apparativen Aufwand und weiterhin hohe Energiedichten erfordert. Schließlich sind auch hier zuvor die jeweiligen Di- bzw. Trihalosilane erst aufwändig herzustellen.

Alternativ können höhere Hydridosilane auch durch Dehalogenierung und Polykondensation von Halosilanen mit Alkalimetallen hergestellt werden (GB 2 077 710 A). Auch dieses Verfahren führt jedoch zu nicht ausreichend hohen Ausbeuten. Weiterhin ist dies Verfahren nur wenig selektiv.

A. Kaczmarczyk et al., J. Inorg. Nucl. Chem., 1964, Vol. 26, 421-425 bzw. G. Urry, J. Inorg. Nucl. Chem., 1964, Vol. 26, 409-414 lehren den katalytischen Aufbau höherer Chlorsilane aus niederen Chlorsilanen, insbesondere den Aufbau von Pentasilicium-dodekachlorid (dem Chloranalogen von Neopentasilan, Si(SiH₃)₄). So Iehrt A . Kaczmarczyk et al., J. Inorg. Nucl. Chem., 1964, Vol. 26, 421-425 die Synthese von Pentasiliciumdodekachlorid aus Hexachlordisilan unter Entstehung von Tetrachlorsilan. Weiterhin wird dort beschrieben, dass bei einem entsprechenden Einsatz von Octachlortrisilan Pentasiliciumdodekachlorid und Hexachlordisilan entsteht. Bei dem dort eingesetzten Katalysator handelt es sich um Trimethylamin. G. Urry, J. Inorg. Nucl. Chem., 1964, Vol. 26, 409-414 lehren die trimethylaminkatalysierte Synthese von Pentasiliciumdodekachlorid aus Hexachlordisilan unter Entstehung von Tetrachlorsilan bzw. aus Octachlortrisilan unter Entstehung von Hexachlordisilan. Die Hydrierung der Produkte zu Hydridosilanen wird dort nicht beschrieben. Weiterhin werden nach diesen Verfahren nicht zufrieden stellende Ausbeuten an höheren Perchlorsilanen erreicht. Darüber hinaus ist bei der Synthesevariante einsetzend Octachlortrisilan nachteilig, dass das entstehende Nebenprodukt Hexachlordisilan im Gegensatz zu dem bei der auf Hexachlordisilan basierenden Verfahrensvariante entstehenden Tetrachlorsilan bei Raumtemperatur und Normaldruck nicht leicht flüchtig ist und somit nicht abgezogen, sondern aufwändig abdestilliert werden muss.

WO 2008/051328 A1 Iehrt, zur Erzeugung Neopentasilan-haltiger Zusammensetzungen ein Hexahalodisilan der Formel X₃SiSiX₃ mit einem tertiären Aminkatalysator unter Bildung einer ersten Mischung umfassend Tetrakis(trihalosilyl)silan (Si(SiX₃)₄) und Tetrahalosilan umzusetzen. Die beiden Hauptbestandteile Tetrakis(trihalosilyl)silan und Tetrahalosilan können voneinander separiert werden. Das erhaltene Tetrakis-(trihalosilyl)silan kann durch Hydrierung mit Diisobutylaluminiumhydrid in Neopentasilan (Si(SiH₃)₄) umgewandelt werden. Doch auch dieses Verfahren führt aufgrund der Reaktionsgleichung (4 Si₂Cl₆ → Si₅Cl₁₂ + 3 SiCl₄) noch nicht zu zufrieden stellenden Ausbeuten.

Es stellt sich somit die Aufgabe, die beschriebenen Nachteile des Standes der Technik zu vermeiden. Insbesondere stellt sich die Aufgabe, ein Verfahren bereitzustellen, mit dem aus Halogensilanen schneller und in höherer Ausbeute Hydridosilane, insbesondere Neopentasilan, hergestellt werden können, ohne dass Nebenprodukte entstehen, die aufwändig abzutrennen sind.

Diese Aufgabe wird vorliegend gelöst durch das erfindungsgemäße Verfahren zur Herstellung von Hydridosilanen aus Halogensilanen, bei dem
a)
   i) mindestens ein Halogensilan der generischen Formel. SiₙX₂ₙ₊₂ (mit n ≥ 3 und X = F, Cl, Br und/oder I) und
   ii) mindestens ein Katalysator der generischen Formel

      NRR'ₐR"_{b}Y_{c}

      mit a = 0 oder 1, b = 0 oder 1, und c = 0 oder 1, und 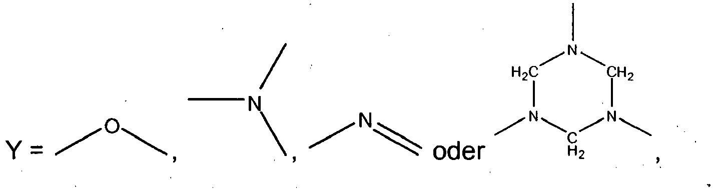 wobei
      aa)
         - R, R' und/oder R" gleich -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl, insbesondere bevorzugt -Ph, -PhCH₃, -PhC₂H₅, -PhC₃H₇, -CH₂(C₆H₄)CH₃, -CH₂(C₆H₄)C₂H₅, -C2H₄(C₆H₄)C₂H₅, -C₂H₄(C₆H₄)C₃H₇, -C₃H₆(C₆H₄)-C₃H₇, -C₆H₂(CH₃)₃, -C₆H₃(CH₃)₂, -C8H₇, -C₈H₆CH₃, -PhNR"'R"", -PhCH₂NR"'R"", -PhC₂H₄NR"'R"", -PhC₃H₆NR"'R"", -CH₂(C₆H₄)CH₂NR"'R"", -CH₂(C₆H₄)C₂H₄-NR"'R"", -C₂H₄(C₆H₄)C₂H₄NR"'R"", -C₂H₄(C₆H₄)C₃H₆NR'"R"", -C₃H₆(C₆H₄)C₃H₆NR""R"", -CH₂NR""R"", -C₂H₄NR'"R"", -C₃H₆NR"'R"", -C₄H₈NR"'R"", -C₅H₁₀NR"'R"", -C₆H₁₂NR"'R"", -C₇H₁₄NR'"R"",-C₈H₁₆NR'"R"", -C₉H₁₈NR"'R"" und/öder -C₁₀H₂₀NR'"R"" (mit R"' und R"" = -C₁-C₁₀-Alkyl, -C₁-C₁₀-Aryl und/oder -C₁-C₁₀-Aralkyl) sind,
            und/oder
         - zwei oder drei Reste R, R' und R" im Falle von c = 0 gemeinsam ein N einschließendes cyclisehes oder bicydisches, heteroaliphatisches oder heteraromatisches System bilden,
            insbesondere handelt es sich dabei bevorzugt bei dem cyclischen oder bicyclischen, heteroaliphatischen oder heterarornatischen System um ein Pyrrolidin-, Pyrrol-, Piperidin-, Pyridin-, Hexa-methylenimin-, Azatropiliden- oder ein Chinolin-Ringsystem,
         - mit der Maßgabe, dass mindestens ein Rest R, R' oder R" nicht -CH₃ ist
            und/oder
      bb)
         - R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁-C₁₂-Hetero-arylen, -C₁-C₁₂-Heteroaralkylen und/oder -N=,
            insbesondere bevorzugt -CH₂-, -C₂H₄-, -C₃H₆-, -C₄H₈-, -C₅H₁₀-,-C₆H₁₂-, -C₇H₁₄-, -C₈H₁₆-, -C₉H₁₈-, -C₁₀H₂₀-, -Ph-, -PhCH₂-,-PhC₂H₄-, -PhC₃H₆-, -CH₂(C₆H₄)CH₂-, -CH₂(C₆H₄)C₂H₄-,-C₂H₄(C₆H₄)C₂H₄-, -C₂H₄(C₆H₄)C₃H₆-, -C₃H₆(C₆H₄)C₃H₆-,-C₆H(CH₃)₃-, -C₆H₂(CH₃)₂-, -CH=, -CH=CH-, -N=, -N=CH-und/oder -CH=N-, ist,
            oder
      cc)
         - (im Falle von a = b = c = 0) R = ≡C-R"' (mit R'" = -C₁-C₁₀-Alkyl, -C₁-C₁₀-Aryl und/oder -C₁-C₁₀-Aralkyl) ist,
            unter Bildung eines Gemisches umfassend mindestens ein Halogensilan der generischen Formel SiₘX₂ₘ₊₂ (mit m > n und X = F, Cl, Br und/oder I) und SiX₄ (mit X = F, Cl, Br und/oder I) umgesetzt werden,
            und
b) das mindestens eine Halogensilan der generischen Formel SiₘX₂ₘ₊₂ unter Bildung eines Hydridosilans der generischen Formel SiₘH₂ₘ₊₂ hydriert wird,

Dies Verfahren löst nicht nur die sich gegenüber dem Stand der Technik stellenden Aufgaben, sondern führt darüber hinaus auch mit besserer Raumzeit-Ausbeute zu reineren Hydridosilanen.

Bei dem bei dem erfindungsgemäßen Verfahren eingesetzten Halogensilan handelt es sich um eine Verbindung, die im Wesentlichen nur aus Siliciumatomen und Halogenatomen (Halogen = Fluor, Chlor, Brom, Iod) besteht und die mindestens drei Siliciumatome aufweist. Halogensilane der generischen Formel SiₙX₂ₙ₊₂ mit mindestens drei bzw. vier Siliciumatomen können eine lineare oder verzweigte Struktur aufweisen.

Besonders gut für das erfindungsgemäße Verfahren einsetzbar sind lineare Halogensilane.

Bevorzugt ist das mindestens eine Halogensilan der generischen Formel SiₙX₂ₙ₊₂ eine Verbindung ausgewählt aus der Gruppe der Octahalogentrisilane oder der Dekahalogentetrasilane, d.h. der Verbindungen der generischen Formel. Si₃X₈ bzw. Si₄X₁₀ mit X = F, Cl, Br und/oder I.

Ganz besonders bevorzugt sind Octahalogentrisilane. Von diesen Verbindungen sind wiederum Octafluortrisilan, Octachlortrisilan, Octabromtrisilan, und Octaiodtrisilan, d.h. die Verbindungen der generischen Formel Si₃X₈ mit X = F, Cl, Br oder I, besonders bevorzugt. Ganz besonders bevorzugt wird für das erfindungsgemäße Verfahren Octachlortrisilan eingesetzt. Der Einsatz von Octachlortrisilan hat bei dem erfindungsgemäßen Verfahren den Vorteil, dass als primäres Verfahrensprodukt (neben SiX₄) Neopentasilan in wesentlich höheren Ausbeuten und in wesentlich höherer Reinheit als nach anderen Verfahren gemäß dem Stand der Technik hergestellt werden kann.

Der Anteil des mindestens einen Halogensilans an dem bei dem Verfahren eingesetzten Reaktionsgemisch beträgt vorzugsweise mindestens 60, bevorzugt mindestens 80 Gew.-% bezogen auf die Gesamtmasse des Reaktionsgemisches. Ganz besonders bevorzugt enthält das Reaktionsgemisch nur den mindestens einen Katalysator und das bzw. die Halogensilane.

Bei dem erfindungsgemäßen Verfahren können ein Halogensilan oder mehrere Halogensilane eingesetzt werden. Bevorzugt wird nur ein Halogensilan eingesetzt. Werden mehrere Halogensilane eingesetzt, liegt bevorzugt mindestens ein Halogensilan als Octahalogentrisilan in einem Anteil von mindestens 20, bevorzugt mindestens 80 Gew.-% bezogen auf die Mischung an Halogensilanen vor.

Bei dem bei dem erfindungsgemäßen Verfahren einsetzbaren Katalysator handelt es sich um einen Katalysator der generischen Formel

**NRR'ₐR"_{b}Y_{c}**

mit a = 0 oder 1, b = 0 oder 1, und c = 0 oder 1, und 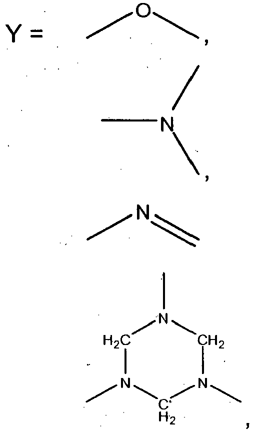 oder wobei R, R' und R" unabhängig voneinander verschiedene ein- oder zweibindige Reste sein können, die Substituenten des Stickstoffatoms N sind oder mit dem Stickstoffatom - ggf. unter Inkorporation einer Gruppe Y, sofern anwesend - eine (ggf. bi- oder tri-)cyclische Struktur bilden können.

Für den Fall, dass c = 0 und a und b = 1 ist, beschreibt die generische Formel des Katalysators eine bevorzugte Gruppe von Katalysatoren, die tertiäre (ggf. cyclische, bicyclische oder tricyclische) Amine oder stickstoffhaltige Heteroaromaten sein können.

Besonders bevorzugt handelt es sich im Falle von a = b = 1 und c = 0 bei dem Katalysator in diesem Fall um ein tertiäres Amin, d.h. um einen Katalysator der generischen Formel

NRR'R",

bei dem R, R' und R" gleich -Ph, -PhCH₃, -PhC₂H₅, -PhC₃H₇, -CH₂(C₆H₄)CH₃, -CH₂(C₆H₄)C₂H₅, -C₂H₄(C₆H4)C₂H₅, -C₂H₄(C₆H₄)C₃H₇, -C₃H₆(C₆H₄)-C₃H₇, -C₆H₂(CH₃)₃, -C₆H₃(CH₃)₂, -C₈H₇, -C₈H₆CH₃, -PhNR"'R"", -PhCH₂NR"'R"", -PhC₂H₄NR"'R"", -PhC₃H₆NR'"R"", -CH₂(C₈H₄)CH₂NR'"R"", -CH₂(C₆H₄)C₂H₄NR'"R"", -C₂H₄(C₆H₄)-C₂H₄NR'"R"", -C₂H₄(C₆H₄)C₃H₆NR"'R"", -C₃H₆(C₆H₄)C₃H₆NR'"R"", -CH₂NR'"R"", -C₂H₄NR"'R"", -C₃H₆NR""R"", -C₄H₈NR'"R"", -C₅H₁₀NR"'R"", -C₆H₁₂NR"'R"",-C₇H₁₄NR"'R"", C₈H₁₆NR"'R"", -C₉H₁₈NR"'R"" und/oder -C₁₀H₂₀NR"'R"" (mit R'" und R"" = -C₁-C₁₀-Alkyl, -C₁-C₁₀-Aryl und/oder -C₁-C₁₀-Aralkyl) sind, mit der Maßgabe, dass mindestens ein Rest R, R' oder R" nicht -CH₃ ist.

Vorzugsweise können zwei oder drei Reste R, R' und R" im Falle von c = 0 und a = 1 und b = 0 oder 1 gemeinsam ein N einschließendes cyclisches oder bicyclisches, heteroaliphatisches oder heteraromatisches System bilden. Bevorzugt handelt es sich dabei bei den resultierenden Katalysatoren um cyclische oder bicyclische, heteroaliphatische oder heteraromatische Ringsysteme, bevorzugt um Pyrrolidin, Pyrrol, Piperidin, Pyridin, Hexamethylenimin, Azatropiliden oder Chinolin.

Bevorzugt kann (im Falle von a = b = c = 0) R auch ≡C-R"' (mit R'" = -C₁-C₁₀-Alkyl, -C₁-C₁₀-Aryl und/oder -C₁-C₁₀-Aralkyl) sein. Entsprechende Katalysatoren sind Alkylnitrile.

Für den Fall, dass c = 1 ist, beschreibt die generische Formel NRR'ₐR"_{b}Y_{c} verschiedene Katalysatoren mit mindestens einem weiteren Heteroatom mit cyclischer bzw. bi-(ggf. poly)cyclischer Struktur.

Bevorzugte einfach cyclische Strukturen, z.B. Triazole, Oxazine oder Piperazine, resultieren in dem Fall,
dass Y = 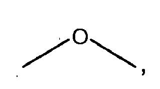 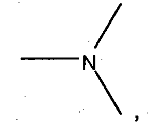 oder 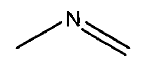 ist und zwei bzw. drei entsprechende Reste R, R' und R" aus der Gruppe bestehend aus -C₁-C₁₂-Alkylen-, -C₁-C₁₂-Arylen-, -C₁-C₁₂-Aralkylen-, -C₁-C₁₂-Heteroalkylen-, -C₁-C₁₂-Heteroarylen- und -C₁-C₁₂-Heteroaralkylenresten und/oder -N= (bevorzugt -CH₂-, -C₂H₄-, -C₃H₆-, -C₄H₈-, -C₅H₁₀-, -C₆H₁₂-, -C₇H₁₄-, -C₈H₁₆-, -C₉H₁₈-, -C₁₀H₂₀-, -Ph-, -PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-, -C₆H(CH₃)₃-, -C₆H₂(CH₃)₂-, -CH=, -CH=CH-, -N=, -N=CH- und/oder -CH=N-) ausgewählt werden. Der jeweils ggf. bei der Ringbildung nicht beteiligte Rest R, R' bzw. R" ist dann ausgewählt aus der Gruppe bestehend aus - C₁-C₁₂-Alkyl, -C₁-C₁₂-Aryl, -C₁-C₁₂-Aralkyl, -C₁-C₁₂-Aminoalkyl; -C₁-C₁₂-Aminoaryl, -C₁-C₁₂-Aminoaralkyl, bevorzugt -Ph, -PhCH₃, -PhC₂H₅, -PhC₃H₇, -CH₂(C₆H₄)CH₃, -CH₂(C₆H₄)C₂H₅, -C₂H₄(C₆H₄)C₂H₅, -C₂H₄(C₆H₄)C₃H₇, -C₃H₆(C₆H₄)-C₃H₇, -C₆H₂(CH₃)₃, -C₆H₃(CH₃)₂, -C₈H₇, -C₈H₆CH₃, -PhNR"'R"", -PhCH₂NR"'R"", -PhC₂H₄NR"'R"", -PhC₃H₆NR"'R"", -CH₂(C₆H₄)CH₂NR""R"", -CH₂(C₆H₄)C₂H₄NR"'R"", -C₂H₄(C₆H₄)-C₂H₄NR"'R"", -C₂H₄(C₆H₄)C₃H₆NR"'R"", -C₃H₆(C₆H₄)C₃H₆NR"'R"", -CH₂NR'"R"", -C₂H₄NR"'R"", -C₃H₆NR"'R"", -C₄H₈NR"'R"", -C₅H₁₀NR"'R"", -C₆H₁₂NR"'R"", -C₇H₁₄NR'"R"",-C₈H₁₆NR"'R"", -C₉H₁₈NR"'R"" und/oder -C₁₀H₂₀NR"'R"" (mit R'" und R"" = -C₁-C₁₀-Alkyl, -C₁-C₁₀-Aryl und/oder -C₁-C₁₀-Aralkyl).

Ganz besonders bevorzugt handelt es sich bei dem Katalysator der generischen Formel NRR'ₐR"_{b}Y_{c} mit c = 1 um eine bi- oder polycyclische Aminoverbindung. Bi- oder polycyclische Aminverbindungen resultieren für den Fall, dass
Y = 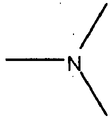 oder 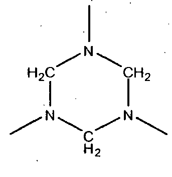 ist
und eine entsprechende Auswahl der Reste R, R' und R" aus der Gruppe bestehend aus -C₁-C₁₂-Alkylen-, -C₁-C₁₂-Arylen-, -C₁-C₁₂-Aralkylen-, -C₁-C₁₂-Heteroalkylen-, -C₁-C₁₂₋Heteroarylen- und -C₁-C₁₂-Heteroaralkylenresten und/oder -N= getroffen wird. Weiter bevorzugt sind die Reste R, R' und R" ausgewählt aus der Gruppe bestehend aus -CH₂-, -C₂H₄-, -C₃H₆-, -C₄H₈-, -C₅H₁₀-, -C₆H₁₂-, -C₇H₁₄-, -C₈H₁₆-, -C₉H₁₈-, -C₁₀H₂₀-, -Ph-, ₋PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-, -C₆H(CH₃)₃-, -C₆H₂(CH₃)₂-, -CH=, -CH=CH-, -N=, -N=CH- und/oder -CH=N- Ganz besonders bevorzugte Katalysatoren sind Azabicycloalkane und Piperazine, insbesondere Diazabicyclooctan und N,N-1,4-Dimethylpiperazin.

Die besten Ergebnisse können erzielt werden, wenn bei dem erfindungsgemäßen Verfahren Katalysatoren ausgewählt aus der Gruppe an Verbindungen bestehend aus cyclischen, bicyclische-n oder polycyclischen Aminen mit oder ohne weiteren Heteroatomen eingesetzt werden.

Noch weiter bevorzugt kann als Katalysator Diazabicyclooctan, Pyridin und N,N-1,4-Dimethylpiperazin eingesetzt werden. Diese Katalysatoren eignen sich besonders gut dazu, die Umsetzung von Octahalogentrisilanen zu den entsprechenden Tetrakis-(trihalosilyl)silanen (Si(SiX₃)₄) zu katalysieren.

Ebenfalls Gegenstand der vorliegenden Erfindung ist somit ein Verfahren zur Herstellung von Neopentasilan, bei dem
a)
   i) mindestens ein Octahalogentrisilan der generischen Formel Si₃X₈ mit X = F, Cl, Br und/oder I mit
   ii) mindestens einem Katalysator ausgewählt aus der Gruppe bestehend aus Diazabicyclooctan, Pyridin und N,N-1,4-Dimethylpi,perazin
      unter Bildung eines Gemisches umfassend mindestens ein Halogensilan der generischen Formel Si₅X₁₂ (mit X = F, Cl, Br und/oder I) und SiX₄ (mit X = F, Cl, Br und/oder I) umgesetzt wird, und
b) das mindestens eine Halogensilan der generischen Formel Si₅X₁₂ unter Bildung von Neopentasilan hydriert wird.

Der Anteil des mindestens einen Katalysators, bezogen auf die eingesetzte Menge an Chlorsilan beträgt bei dem erfindungsgemäßen Verfahren zur Herstellung von Hydridosilane, insbesondere Neopentasilan, bevorzugt zwischen 0,001 und 1 Gew.-%.

Der Katalysator kann dabei als Reinsubstanz oder als Aufschlämmung in einem Lösemittel wie z.B. Diethylether, bevorzugt in Anteilen des Katalysators von 1 - 25 Gew.-% bezogen auf die Gesamtmasse der Aufschlämmung, eingesetzt werden.

Die Reaktion kann in An- oder Abwesenheit eines Lösemittels erfolgen. Bevorzugt wird das erfindungsgemäße Verfahren ohne Lösemittel durchgeführt. Wird es doch in Gegenwart eines Lösemittels durchgeführt, können als bevorzugte Lösemittel Lösemittel ausgewählt aus der Gruppe bestehend aus linearen, verzweigten oder cyclischen gesättigten, ungesättigten oder aromatischen Kohlenwasserstoffen mit einem bis 12 Kohlenstoffatomen (ggf. partiell oder vollständig halogeniert), Ethern, Ketonen und Estern eingesetzt werden. Besonders bevorzugt sind n-Pentan, n-Hexan, n-Hepta n, n-Oktan, n-Dekan, Dodekan, Cyclohexan, Cyclooctan, Cyclodekan, Dicyclopentan, Benzol, Toluol, m-Xylol, p-Xylol, Mesitylen, Tetrahydronäphtalin, Decahydronaphtalin, Diethylether, Dipropylether, Ethylenglycoldimethylether, Ethylenglycoldiethylether, Ethylenglycolmethylethylether, Diethylenglycoldimethylether, Diethylenglycoldiethylether, Diethylenglycolmethylethylether, Tetrahydrofuran, Aceton, p-Dioxan, . Acetonitril, Dimethylformamid, Dimethylsulfoxid, Dichlormethan und Chloroform. Besonders gut einsetzbare Lösemittel sind die Kohlenwasserstoffe n-Pentan, n-Hexan, n-Hexan, n-Oktan, n-Dekan, Dodekan, Cyclohexan, Cyclooctan, Cyclodekan, Benzol, Toluol, m-Xylol, p-Xylol, Mesitylen. Das Lösemittel kann 0,01 bis 90 Gew.% der Gesamtmasse ausmachen.

Die katalysatorunterstützte Umsetzung des Halogensilans der generischen Formel SiₙX₂ₙ₊₂ erfolgt bevorzugt bei Temperaturen von -78 bis 300 °C und Drücken von 1 mbar bis 5 bar. Besonders bevorzugt erfolgt die katalysatorunterstützte Umsetzung des Halogensilans bei 10 - 50 °C und 900 bis 1100 mbar.

Nach der Bildung des Gemisches enthaltend mindestens ein Halogensilan der generischen Formel SiₘX₂ₘ₊₂ (mit m > n und X = F, Cl, Br und/oder I) und SiX₄ kann dies Gemisch prinzipiell ohne eine weitere Aufreinigung für die nachfolgende Hydrierung eingesetzt werden.

Bevorzugt wird jedoch das entstandene Tetrahalogensilan vor der Hydrierung von dem entstandenen Halogerisilan der generischen Formel SiₘX₂ₘ₊₂ abgetrennt. Weiter bevorzugt erfolgt dies über ein Abdestillieren bzw. Abziehen von SiX₄ bei Temperaturen von -30 bis +100 °C und Drücken von 0,01 bis 1100 mbar, bevorzugt bei Temperaturen von +20 bis +30 °C und Drücken von 0,02 bis 0,2 mbar.

Das mindestens eine Halogensilan der generischen Formel SiₘX₂ₘ₊₂ wird unter Bildung eines Hydridosilans der generischen Formel SiₘH₂ₘ₊₂ hydriert. Bevorzugt erfolgt dies unter Einsatz mindestens eines Hydrierungsmittels ausgewählt aus der Gruppe der Metallhydride eines Metalls der 1. bis 3. Hauptgruppe (insbesondere Alkali- oder Erdalkalimetallhydride) oder der Gruppe der hydridischen Verbindungen bestehend aus LiAlH₄, NaBH₄, iBu₂AlH. Besonders bevorzugt handelt es sich bei dem Hydrierungsmittel um iBu2AlH.

Auch unter den nach dem erfindungsgemäßen Verfahren herstellbaren Hydridosilanen sind Verbindungen zu verstehen, die im Wesentlichen lediglich Silicium- und Wasserstoffatome enthalten. Diese Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Disilan, Trisilan, Cyclopentasilan und Neopentasilan genannt. Auch diese Hydridosilanen können eine lineare oder verzweigte Struktur mit Si-H-Bindungen aufweisen. Das erfindungsgemäße Verfahren eignet sich besonders gut zur Herstellung verzweigter Hydridosilane. Insbesondere eignet es sich besonders gut bei Wahl geeigneter Edukte zur Herstellung von Neopentasilan.

Bei der Hydrierung liegt das Hydrierungsmittel bevorzugt in einem 2- bis 30-fachen, bevorzugt 10- bis 15-fachen molaren Überschuß, bezogen auf die anwesenden Halogensilane, vor.

Auch die Hydrierung kann in An- oder Abwesenheit eines Lösemittels erfolgen. Bevorzugt wird die Hydrierung ohne Lösemittel durchgeführt. Wird doch in Anwesenheit eines Lösemittels hydriert, können bevorzugt einsetzbare Lösemittel auswählt werden aus der Gruppe bestehend aus linearen, verzweigten oder cyclischen gesättigten, ungesättigten oder aromatischen Kohlenwasserstoffen mit einem bis 12 Kohlenstoffatomen und Ethern. Besonders bevorzugt sind n-Pentan, n-Hexan, n-Heptan, n-Oktan, n-Dekan, Dodekan, Cyclohexan, Cyclooctan, Cyclodekan, Dicyclopentan, Benzol, Toluol, m-Xylol, p-Xylol, Mesitylen, Tetrahydronaphtalin, Decahydronaphtalin, Diethylether, Dipropylether, Ethylenglycoldimethylether, Ethylenglycoldiethylether, Ethylenglycolmethylethylether, Diethylenglycoldimethylether, Diethylenglycoldiethylether, Diethylenglycolmethylethylether, Tetrahydrofuran, p-Dioxan, Acetonitril,. Besonders gut einsetzbare Lösemittel sind die Kohlenwasserstoffe n-Pentan, n-Hexan, n-Hexan, n-Oktan, n-Dekan, Dodekan, Cyclohexan, Cyclooctan, Cyclodekan, Benzol, Toluol, m-Xylol, p-Xylol, Mesitylen. Das Lösemittel kann 0,01 bis 90 Gew.% der Gesamtmasse ausmachen.

Die Hydrierung des Halogensilans der generischen Formel SiₘX₂ₘ₊₂ erfolgt bevorzugt bei Temperaturen von -78 bis 300 °C und Drücken von 500 mbar bis 5 bar. Besonders bevorzugt erfolgt die Hydrierung bei -10 - 30 °C und 900 bis 1100 mbar.

Die folgenden Beispiele sollen den Gegenstand der Erfindung weiter ergänzend erläutern, ohne selbst beschränkend zu wirken.

### Beispiele:

### 1. Erfindungsgemäßes Beispiel

### a) Synthese höherer Halogensilane und Abtrennung

### i) Umsetzung von Si₃Cl₈ zu Si₅Cl₁₂

### aa) Katalysatorvariante I

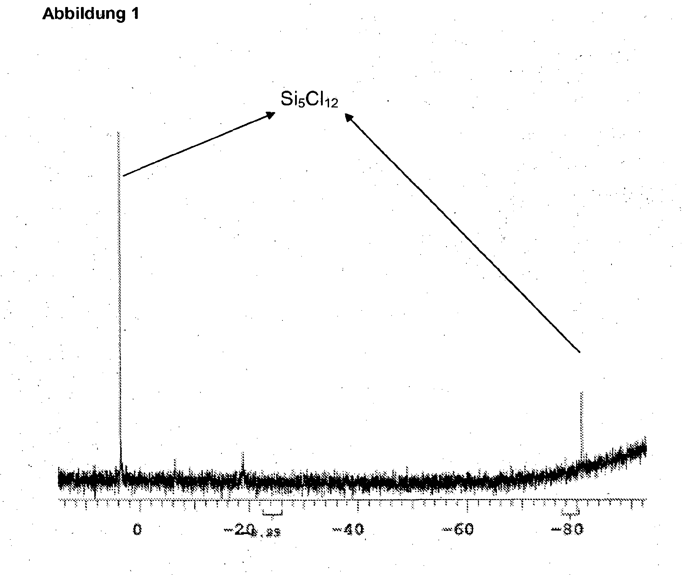

50,8 g (0,14 mol) Octachlortrisilan wurden bei Raumtemperatur unter Rühren 40,0 mg (3,6x10⁻⁴ mol; 0,25mol%) 1,4-Diazabicyclo[2.2.2]octan in 0,5 ml Diethylether versetzt, woraufhin sich das Reaktionsgemisch durch den gebildeten weißen Feststoff innerhalb von 2 Stunden verfestigte. Nach Entfernung der flüchtigen Bestandteile (SiCl₄) bei 40 °C im Vakuum (0,05 mbar) verbleibt das Produkt Si₅Cl₁₂ als weißer, kristalliner Feststoff. Als verbleibendes Hauptprodukt entsteht It. ²⁹Si-NMR Spektroskopie (vgl. Abbildung 1) praktisch reines Si₅Cl₁₂. Die Ausbeuten deuten auf die nachfolgende Reaktionsgleichung hin: 2 Si₃C₁₈ → Si₅Cl₁₂ + SiCl₄

| | |
|---|---|
| Ausbeute Si₅Cl₁₂: | 37.0 g |
| Ausbeute SiCl₄: | 13.0g |

### bb) Katalysatorvariante II

5,1 g (0,014 mol) Octachlortrisilan wurden bei Raumtemperatur unter Rühren mit einer Lösung von 3,7 mg (3,3x10⁻⁵ mol; 0,25mol%) N,N-Dimethylpiperazin in 0,04 ml Diethylether versetzt, woraufhin sich das Reaktionsgemisch durch den gebildeten weißen Feststoff innerhalb von 2 Stunden verfestigte. Nach Entfernung der flüchtigen Bestandteile bei 40 °C im Vakuum (0,05 mbar) verbleibt das Produkt als weißer, kristalliner Feststoff, der mittels ²⁹Si-NMR Spektroskopie als reines Si₅Cl₁₂ identifiert werden konnte.

| | |
|---|---|
| Ausbeute Si₅C1₁₂: | 3.7 g |

### cc) Katalysatorvariante III

5,1 g (0,014 mol) Octachlortrisilan wurden bei Raumtemperatur unter Rühren mit 4,4 mg (4.0x10⁻⁵ mol; 0.3 mol%) N,N-Dimethylpiperazin versetzt, woraufhin sich das Reaktionsgemisch durch den gebildeten weißen Feststoff innerhalb von 24 Stunden verfestigte. Nach Entfernung der flüchtigen Bestandteile bei 40 °C im Vakuum (0,05 mbar) verbleibt das Produkt als weißer, kristalliner Feststoff, der mittels ²⁹Si-NMR Spektroskopie als reines Si₅Cl₁₂ identifiert werden konnte.

| | |
|---|---|
| Ausbeute Si₅Cl₁₂: | 3,7 g |

### dd) Katalysatorvariante IV

5,1 g (0,014 mol) Octachlortrisilan wurden bei Raumtemperatur unter Rühren mit einer Lösung von 2,8 mg (3,5x10⁻⁵ mol; 0,25mol%) Pyridin in 0,04 ml Diethylether versetzt, woraufhin sich das Reaktionsgemisch durch den gebildeten weißen Feststoff innerhalb von 12 Stunden verfestigte. Nach Entfernung der flüchtigen Bestandteile bei 40 °C im Vakuum (0,05 mbar) verbleibt das Produkt als kristalliner Feststoff, der mittels ²⁹Si-NMR Spektroskopie als reines Si₅Cl₁₂ identifiert werden konnte.

| | |
|---|---|
| Ausbeute Si₅Cl₁₂: | 3,7_g |

### ee) Katalysatorvariante V

5,1 g (0,014 mol) Octachlortrisilan wurden bei Raumtemperatur unter Rühren mit 3.5 mg (4.2x10⁻⁵ mol; 0.3mol%) Pyridin versetzt, woraufhin sich das Reaktionsgemisch durch den gebildeten weißen Feststoff innerhalb von 12 Stunden verfestigte. Nach Entfernung der flüchtigen Bestandteile bei 40 °C im Vakuum (0,05 mbar) verbleibt das Produkt als kristalliner Feststoff, der mittels ²⁹Si-NMR Spektroskopie als reines Si₅Cl₁₂ identifiert werden konnte. Die Ausbeuten deuten auf die nachfolgende Reaktionsgleichung hin:

| | |
|---|---|
| Ausbeute Si₅Cl₁₂: | 3,7 g |

### ii) Umsetzung des Destillationsrückstandes von Si₃Cl₈ zu Si₅Cl₁₂

50 g eines aus der Synthese von Octachlortrisilan stammenden, nach der destillativen Abtrennung von Octachlortrisilan verbleibenden Gemisches höherer Chlorsilane mit mindestens 4 Si-Atomen wurde bei Raumtemperatur unter Rühren mit 40,0 mg (3,6x10⁻⁴ mol) 1,4-Diazabicyclo[2.2.2]octan in 0,5 ml Diethylether versetzt, woraufhin sich das Reaktionsgemisch durch den gebildeten weißen Feststoff innerhalb von 12 Stunden verfestigte. Nach Entfernung der flüchtigen Bestandteile (SiCl₄) bei 40 °C im Vakuum (0,05 mbar) verbleibt ein weißer, kristalliner Feststoff.

| | |
|---|---|
| Ausbeute Si₅Cl₁₂: | 44,0 g |
| Ausbeute SiCl₄: | 6,0 g |

Fazit: Auch höhere Chlorsilane lassen sich katalytisch zu Si₅Cl₁₂ umlagern. Die Ausbeute steigt sogar im Vergleich zu Di- oder Trisilan noch an, während die Produktqualität durchaus ansprechend bleibt. Die Reaktionsgeschwindigkeit ist relativ zu Si₃Cl₈ etwas geringer.

### b) Hydrierung

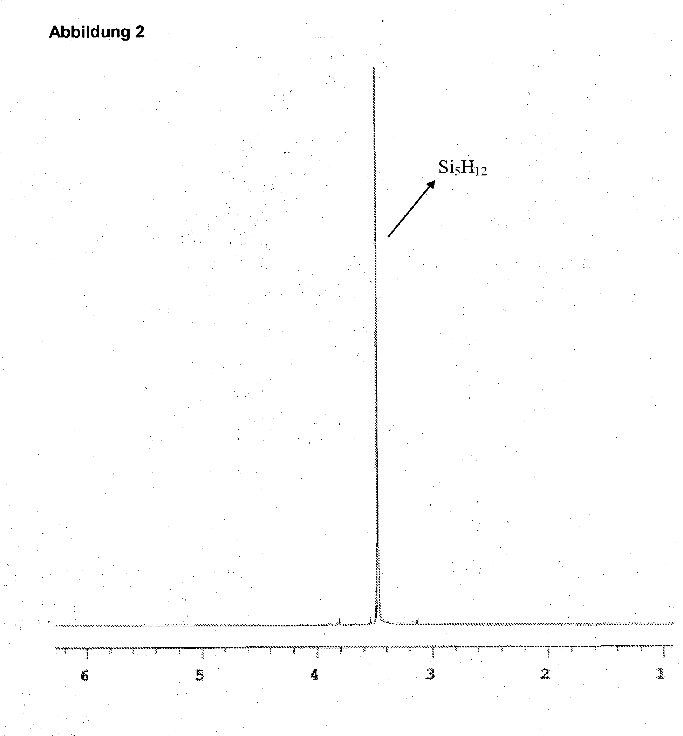

38,0 g (0,067 mol) Tetrakis(trichlorsilyl)silan wurden unter Eiskühlung mit 131 g (0,92 mol) Diisobutylaluminiumhydrid versetzt und über Nacht bei Raumtemperatur gerührt. Anschließend wurde das Produkt durch Umkondensieren im Vakuum (0,05 mbar, Raumtemperatur) aus dem Reaktionsgemisch isoliert; wobei eine klare, farblose Flüssigkeit erhalten wurden.
Das ¹H-NMR (Abbildung 2) zeigt als Hauptprodukt Si₅H₁₂

| | |
|---|---|
| Ausbeute: | 9,7 g |

### 2. Vergleichsbeispiel

### a) Umsetzung von Si₂Cl₆ zu Si₅Cl₁₂

60 g (0,22 mol) Hexachlordisilan wurden bei Raumtemperatur unter Rühren mit 60,0 mg (5,4x10⁻⁴ mol; 0,24mol%) 1,4-Diazabicyclo[2.2.2]octan in 0,5 ml Diethylether versetzt, woraufhin sich das Reaktionsgemisch durch den gebildeten weißen Feststoff innerhalb von 15 Stunden verfestigte. Nach Entfernung der flüchtigen Bestandteile bei 40 °C im Vakuum (0,05 mbar) verbleibt das Produkt als weißer, kristalliner Feststoff. Als Reaktionsprodukt entsteht It. ²⁹Si-NMR Spektroskopie praktisch reines Si₅Cl₁₂.

| | |
|---|---|
| Ausbeute Si₅Cl₁₂: | 29,6 g |
| Ausbeute SiCl₄: | 28,0 g |

### Fazit:

Si₃Cl₈ und höhere Chlorsilane lassen sich katalytisch zu Si₅Cl₁₂ umlagern. Die Ausbeuten sind höher als im Falle des Einsatzes von Si₂Cl₆. Die Reaktionsgeschwindigkeit ist relativ zu dem Einsatz von Si₂Cl₆ deutlich größer.

## Patentansprüche

1. Verfahren zur Herstellung von Hydridosilanen aus Halogensilanen,
**dadurch gekennzeichnet, dass**
a)
i) mindestens ein Halogensilan der generischen Formel SiₙX₂ₙ₊₂ (mit n ≥ 3 und X = F, Cl, Br und/oder I) und
ii) mindestens ein Katalysator der generischen Formel
NRR'ₐR"_{b}Y_{c}
mit a = 0 oder 1, b = 0 oder 1, und c = 0 oder 1, und 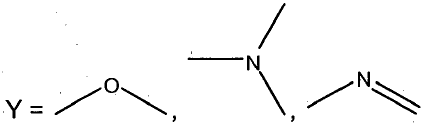 oder 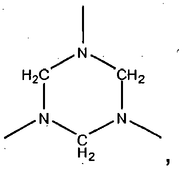 wobei
aa)
- R, R' und/oder R" gleich -C₁-C₁₂-Alkyl, -C₁-C₁₂-Aryl, -C₁-C₁₂-Aralkyl, -C₁-C₁₂₋Aminoalkyl, -C₁-C₁₂-Aminoaryl, -C₁-C₁₂-Aminoaralkyl, und/oder
- zwei oder drei Reste R, R' und R" im Falle von c = 0 gemeinsam ein N einschließendes cyclisches oder bicyclisches, heteroaliphatisches oder heteraromatisches System bilden,
- mit der Maßgabe, dass mindestens ein Rest R,R' oder R" nicht -CH₃ ist
und/oder
bb)
- R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁₋C₁₂-Hetero-arylen, -C₁-C₁₂-Heteroaralkylen und/oder -N= ist,
oder
cc)
- (im Falle von a = b = c = 0) R = ≡C-R"' (mit R'" = -C₁-C₁₀-Alkyl, -C₁-C₁₀-Aryl und/oder -C₁-C₁₀-Aralkyl) ist,
unter Bildung eines Gemisches umfassend mindestens ein Halogensilan der generischen Formel SiₘX₂ₘ₊₂ (mit m > n und X = F, Cl, Br und/oder I) und SiX₄ (mit X = F, Cl, Br und/oder I) umgesetzt werden,
und
b) das mindestens eine Halogensilan der generischen Formel ,SiₘX₂ₘ₊₂ unter Bildung eines Hydridosilans der generischen Formel SiₘH₂ₘ₊₂ hydriert wird.

2. Verfahren nach einem Anspruch 1
**dadurch gekennzeichnet, dass**
das Halogensilan der generischen Formel SiₙX₂ₙ₊₂ ein lineares Silan ist.

3. Verfahren nach Anspruch 1 oder 2,
**dadurch gekennzeichnet, dass**
das mindestens eine Halogensilan eine Verbindung ausgewählt aus der Gruppe der Verbindungen mit der generischen Formel Si₃X₈ oder Si₄X₁₀ mit X = F, Cl, Br und/oder I ist.

4. Verfahren nach einem der vorhergehenden Ansprüche,
**dadurch gekennzeichnet, dass**
der Katalysator ausgewählt aus der Gruppe an Verbindungen bestehend aus cyclischen, bicyclischen oder polycyclischen Aminen mit oder ohne weiteren Heteroatomen ist.

5. Verfahren nach Anspruch 4,
**dadurch gekennzeichnet, dass**
der Katalysator Diazabicyclooctan, Pyridin oder N,N-1,4-Dimethylpiperazin ist.

6. Verfahren nach einem der vorhergehenden Ansprüche,
**dadurch gekennzeichnet, dass**
dass vor der Hydrierung eine Abtrennung des mindestens einen Halogensilans der generischen Formel SiₘX₂ₘ₊₂ von SiX₄ durch Abdestillieren bzw. Abziehen von SiX₄ bei Temperaturen von -30 bis +100 °C und Drücken von 0,01 bis 1100 mbar erfolgt.

7. Verfahren nach einem der vorhergehenden Ansprüche,
**dadurch gekennzeichnet, dass**
die Hydrierung durch Zugabe mindestens eines Hydrierungsmittels ausgewählt aus der Gruppe der Metallhydride eines Metalls der 1. bis 3. Hauptgruppe oder der Gruppe der hydridischen Verbindungen bestehend aus LiAlH₄, NaBH₄, iBu₂AlH erfolgt.

8. Verfahren nach Anspruch 7,
**dadurch gekennzeichnet, dass**
das Hydrierungsmittel bevorzugt in einem 2- bis 30-fachen, bevorzugt 10- bis 15-fachen molaren Überschuß, bezogen auf die anwesenden Halogensilane, vorliegt.

## Claims

1. A process for preparing hydridosilanes from halosilanes,
**characterized in that**
a)
i) at least one halosilane of the generic formula SiₙX₂ₙ₊₂ (where n ≥ 3 and X = F, Cl, Br and/or I) and
ii) at least one catalyst of the generic formula
NRR'ₐR"_{b}Y_{c}
where a = 0 or 1, b = 0 or 1, and c = 0 or 1, and 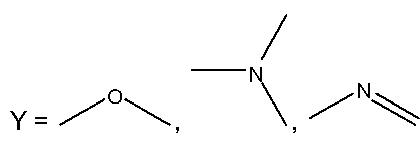 or 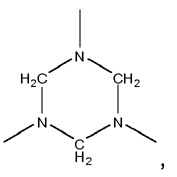 where
aa)
- R, R' and/or R" are each -C₁-C₁₂-alkyl, -C₁-C₁₂-aryl, -C₁-C₁₂-aralkyl, -C₁-C₁₂-aminoalkyl, -C₁-C₁₂-aminoaryl, -C₁-C₁₂-aminoaralkyl,
and/or
- two or three R, R' and R" radicals in the case that c = 0 together form a cyclic or bicyclic, heteroaliphatic or heteroaromatic system including N,
- with the proviso that at least one R, R' or R" radical is not -CH₃ and/or
bb)
- R and R' and/or R" (in the case that c = 1) are each -C₁-C₁₂-alkylene, -C₁-C₁₂-arylene, -C₁-C₁₂-aralkylene, -C₁-C₁₂-heteroalkylene, -C₁-C₁₂-heteroarylene, -C₁-C₁₂-heteroaralkylene and/or -N=,
or
cc)
- (in the case that a = b = c = 0) R = ≡C-R"' (where R'" = -C₁-C₁₀-alkyl, -C₁-C₁₀-aryl and/or -C₁-C₁₀-aralkyl),
are converted to form a mixture comprising at least one halosilane of the generic formula SiₘX₂ₘ₊₂ (where m > n and X = F, Cl, Br and/or I) and SiX₄ (where X = F, Cl, Br and/or I),
and
b) the at least one halosilane of the generic formula SiₘX₂ₘ₊₂ is hydrogenated to form a hydridosilane of the generic formula SiₘH₂ₘ₊₂.

2. A process according to claim 1,
**characterized in that**
the halosilane of the generic formula SiₙX₂ₙ₊₂ is a linear silane.

3. A process according to claim 1 or 2,
**characterized in that**
the at least one halosilane is a compound selected from the group of the compounds with the generic formula Si₃X₈ or Si₄X₁₀ where X = F, Cl, Br and/or I.

4. A process according to any one of the preceding claims,
**characterized in that**
the catalyst is selected from the group of compounds consisting of cyclic, bicyclic and polycyclic amines with or without further heteroatoms.

5. A process according to claim 4,
**characterized in that**
the catalyst is diazabicyclooctane, pyridine or N,N-1,4-dimethylpiperazine.

6. A process according to any one of the preceding claims,
**characterized in that**
the hydrogenation is preceded by separation of the at least one halosilane of the generic formula SiₘX₂ₘ₊₂ from SiX₄ by distillative removal or drawing off SiX₄ at temperatures of -30 to +100°C and pressures of 0.01 to 1100 mbar.

7. A process according to any one of the preceding claims,
**characterized in that**
the hydrogenation is effected by adding at least one hydrogenating agent selected from the group of the metal hydrides of a metal of main groups 1 to 3 or the group of hydridic compounds consisting of LiAlH₄, NaBH₄, iBu₂AlH.

8. A process according to claim 7,
**characterized in that**
the hydrogenating agent is present preferably in a 2- to 30-fold, preferably 10- to 15-fold, molar excess, based on the halosilanes present.

## Revendications

1. Procédé pour la préparation d'hydridosilanes à partir d'halogénosilanes, **caractérisé en ce qu'**on transforme
a)
i) au moins un halogénosilane de formule générique SiₙX₂ₙ₊₂ (dans laquelle n ≥ 3 et X = F, Cl, Br et/ou I) et
ii) au moins un catalyseur de formule générique
NRR'ₐR"_{b}Y_{c}
dans laquelle a = 0 ou 1, b = 0 ou 1, et c = 0 ou 1, et 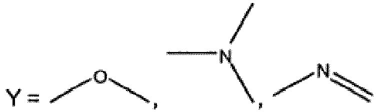 ou 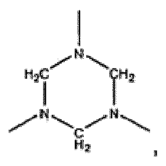 dans laquelle
aa)
- R, R' et/ou R" représentent -C₁-C₁₂-alkyle, -C₁-C₁₂-aryle, -C₁-C₁₂-aralkyle,-C₁-C₁₂-aminoalkyle, -C₁-C₁₂-aminoaryle,-C₁-C₁₂-aminoaralkyle, et/ou
- deux ou trois radicaux R, R' et R", dans le cas de c = 0, forment ensemble un système cyclique ou bicyclique, hétéroaliphatique ou hétéroaromatique incluant l'atome N,
- à condition qu'au moins un radical R, R' ou R" ne représente pas -CH₃ et/ou
bb) R et R' et/ou R" (dans le cas de c = 1) représentent -C₁-C₁₂-alkylène, -C₁-C₁₂-arylène, -C₁-C₁₂-aralkylène, -C₁-C₁₂-hétéroalkylène, -C₁-C₁₂-hétéroarylène,-C₁-C₁₂-hétéroaralkylène et/ou -N=, ou
cc) (dans le cas de a = b = c = 0) R = ≡C-R"' (où R"' = -C₁-C₁₀-alkyle, -C₁-C₁₀-aryle et/ou -C₁-C₁₀-aralkyle),
avec formation d'un mélange comprenant au moins un halogénosilane de formule générique SiₘX₂ₘ₊₂ (dans laquelle m > n et X = F, Cl, Br et/ou I) et SiX₄ (dans laquelle X = F, Cl, Br et/ou I), et
b) ledit au moins un halogénosilane de formule générique SiₘX₂ₘ₊₂ est hydrogéné avec formation d'un hydridosilane de formule générique SiₘH₂ₘ₊₂.

2. Procédé selon la revendication 1, **caractérisé en ce que** l'halogénosilane de formule générique SiₙX₂ₙ₊₂ est un silane linéaire.

3. Procédé selon la revendication 1 ou 2, **caractérisé en ce qu'**au moins un halogénosilane est un composé choisi dans le groupe des composés de formule générique Si₃X₈ ou Si₄X₁₀ avec X = F, Cl, Br et/ou I.

4. Procédé selon l'une quelconque des revendications précédentes, **caractérisé en ce que** le catalyseur est choisi dans le groupe de composés constitué par les amines cycliques, bicycliques ou polycycliques, sans ou contenant d'autres hétéroatomes.

5. Procédé selon la revendication 4, **caractérisé en ce que** le catalyseur est le diazabicyclooctane, la pyridine ou la N,N-1,4-diméthylpipérazine.

6. Procédé selon l'une quelconque des revendications précédentes, **caractérisé en ce qu'**avant l'hydrogénation, une séparation dudit au moins un halogénosilane de formule générique SiₘX₂ₘ₊₂ du SiX₄ a lieu, par élimination par distillation ou soutirage de SiX₄ à des températures de -30 à +100°C et des pressions de 0,01 à 1100 mbars.

7. Procédé selon l'une quelconque des revendications précédentes, **caractérisé en ce que** l'hydrogénation a lieu par addition d'au moins un agent d'hydrogénation choisi dans le groupe des hydrures métalliques d'un métal du 1er au 3ème groupe principal ou du groupe des composés hydrogénés constitué par LiAlH₄, NaBH₄, iBu₂AlH.

8. Procédé selon la revendication 7, **caractérisé en ce que** l'agent d'hydrogénation se trouve de préférence en un excès molaire d'un facteur 2 à 30, de préférence de 10 à 15, par rapport aux halogénosilanes présents.
